# EUROPEAN PATENT SPECIFICATION

(11) **EP 3 838 817 B1**
(45) Date of publication and mention of the grant of the patent: **12.10.2022**
(21) Application number: 20212395.6
(22) Date of filing: 08.12.2020
(51) Int. Cl.: B65G 59/10, B65G 59/06

(54) **MULTIPART DE-STACKER WHEEL**
MEHRTEILIGES ENTSTAPELRAD
ROUE DE DÉSEMPILEUR EN PLUSIEURS PARTIES

(30) Priority: 09.12.2019 DK PA201970756
(43) Date of publication of application: 23.06.2021
(73) Proprietor: QUPAQ ApS, 9700 Brønderslev (DK)
(72) Inventor: NÆSS-SCHMIDT, Steffen, 9310 Vodskov (DK); ANDERSEN, Thomas, 9430 Vadum (DK); ØSTERGAARD TAAGAARD, Rasmus, 9800 Hjørring (DK)
(74) Representative: Patrade A/S

(56) References cited:
- EP-A1- 2 186 760
- WO-A1-2018/137742
- DE-A1- 3 913 589
- DE-A1- 19 638 604
- US-A- 3 741 410

## Description

### Field of the Invention

The present invention relates to a de-stacker wheel for use in a denester as well as a dispenser for dispensing containers using such a de-stacker wheel and furthermore a method of dispensing a container from a stack of identical containers by use of such a de-stacker wheel.

### Background of the Invention

In production lines and particularly in production lines in the food industry it is quite normal to provide for example meat in plastic, aluminium containers (or other materials) which after having been filled with meat are sealed by welding a clear plastic film on top of the container.

Such containers are provided with a flange which will provide adequate surface area in order to fasten the cover film in a manner such that for example a sealed atmosphere may be present inside the container.

These containers are used for a wide variety of foodstuffs, but also for other products. Common for this type of packaging is the fact that the containers are typically vacuum drawn, blow-moulded or injection-moulded and are provided with a flange along the upper periphery of the opening to the container.

In the art a wide variety of apparatuses has been developed in order to dispense this type of containers from a stack of substantially identical containers.

Traditionally these types of de-stacker wheels are made from steel or stainless steel. An example is disclosed in US 3,741,410. It is however also contemplated to manufacture the de-stacker wheels according to the invention from other suitable materials such as for example - but not limiting to aluminum, ceramics, modified fiber-reinforced plastics, and various strong and light alloys.

EP 2 186 760 Al discloses a multipart de-stacker wheel for a denester, where said de-stacker wheel comprises: - a wheel member having a first circular cylinder shape provided with a central cavity extending axially through the wheel member, where the central cavity is suitable to accommodate a rotating axle where the wheel member has a top side, - at least one stack carrying surface having a carrying surface, where the stack carrying surface is arranged on the wheel member - a separation member having a wedge shape, where a height of a first end of said separation member is smaller than a height of a second end of said separation member, where the separation member is attached to the top side on the wheel member covering a part of the top side and where the separation member or part of the separation member extends away from the wheel member substantially perpendicular to the rotation axis of said wheel member, where the second end of said separation member is adjacent to a first end of said stack carrying surface, - when said multipart de-stacker wheel rotates about the axis of said wheel member, parallel to a stack of containers, where each container has a flange along its perimeter, the containers are de-stacked one by one, when the separation member comes in contact with the flange of said container, and by means of the wedge shaped separation member forces said container away from the stack of containers, where the first end of said separation member is displaced relative to a second end of said stack carrying member, away from the top side of said stack carrying member, providing a slit between the first end of said separation member and the second end of said stack carrying member.

### Object of the Invention

It is the object of the present invention to provide a multipart de-stacker wheel, where enhanced engagement means are provided such that even for containers having a minimal flange and being stacked very closely a high reliability of separation, even at high production speed.

### Description of the Invention

The invention addresses this by providing a multipart de-stacker wheel for a denester, where a stack of containers, each container having a flange along its perimeter is to be de-stacked one by one which de-stacker wheel is particular in that by rotating or partly rotating said de-stacker wheel about an axis parallel to said stack of containers, where said de-stacker wheel comprises:
- a wheel member having a first circular cylinder shape provided with a central cavity extending axially through the wheel member, where the central cavity is suitable to accommodate a rotating axel, where the wheel member has a top side,
- at least one stack carrying member having a carrying surface, where the stack carrying member is arranged on the wheel member covering a first part of the top side and extends away from the wheel member substantially perpendicular to an rotating axis of said wheel member,
- a separation member having wedge shape, where a height of a first end of said separation member is smaller than a height of a second end of said separation member, where the separation member is attached to the top side on the wheel member covering a second part of the top side and where the separation member or part of the separation member extends away from the wheel member substantially perpendicular to the axis of said wheel member, where the second end of said separation member is adjacent to a first end of said stack carrying member, where the first end of said separation member is displaced relative to a second end of said stack carrying member, away from the top side of said stack carrying member, providing a slit between the first end of said separation member and the second end of said stack carrying member, so when said multipart de-stacker wheel rotates about the axis of said wheel member, parallel to a stack of containers, where each container has a flange along its perimeter, the containers are de-stacked one by one, when the separation member comes in contact with the flange of said container, and by means of the wedge shaped separation member forces said container away from the stack of containers.

The invention provides a multipart de-stacker wheel, where the parts may be replaceable parts. The multipart de-stacker wheel may comprise a plurality of members, each having a technical function to provide for. Each of the members may be divided into further members. Each member may be a replaceable member.

The advantages of the multipart de-stacker wheel are found in that the multipart de-stacker wheel can be assembled to fit a plurality of denester systems. In one denester system the multipart de-stacker wheel may be provided with a separation member provided with a first width of the top surface and a stack carrying member provided with a first width of the carrying surface in relation to the wheel member. The first width is depending on the separation member and the stack carrying member may reach a flange along the perimeter of the container, when the stack of containers are arranged in a first distance from the axis of said wheel member. The separation member provided with a second width of the top surface and a stack carrying member provided with a second width of the carrying surface in relation to the wheel member. The second width is depending on the separation member and the stack carrying member may reach a flange along the perimeter of the container, when the stack of containers are arranged in a second distance from the axis of said wheel member.

The members may be assembled according to the application of a denester in accordance with the specification comprising container sizes and form and a multipart de-stacker wheel arranged in a predefined distance from the stack of containers. The separation member is attached to the top side of the wheel member covering a part of the top side or of the side part of the wheel member. The separation member extends away from the wheel member substantially perpendicular to the axis of said wheel member. The second end of the separation member is adjacent to the first end of the stack carrying member. The stack carrying member may also be attached to the wheel member covering the part of the top side, which is not covered by the separation member. The stack carrying member extends away from the wheel member substantially perpendicular to the axis of said wheel member. The separation member and the stack carrying member form a substantially wedged threaded form of flange where the flange extends substantially perpendicular to the rotating axis of the wheel member. The first end of the separation member is displaced relative to a second end of the stack carrying member. The first end of the separation member is lifted away from the carrying surface of said stack carrying member. The displacement provides a slit between the first end of said separation member and the second end of said stack carrying member. The size of the slit is depended on the size and form of the containers to be separated.

The wheel member rotates about the axis of a rotating axel provided in the central cavity of the wheel member. The rotating axel is arranged in a distance to the stack of containers. The containers are de-stacked one by one, when the separation member comes in contact with the flange of said container, while the rotating axel rotates the wheel member. By means of the wedge shaped separation member the first end, formed as an edge, forces one container away from the stack of containers for every 360°rotation of the wheel member.

The members may be replaced one by one, when the members are worn out. It is then possible to replace the worn out member of the multipart de-stacker wheel. This will reduce the maintenance costs and the replacement process is quickly and agile.

In an advantageous embodiment of the invention, said stack carrying member comprises a retainer member having a second circular cylinder shape with a retainer cavity extending axially through said the retainer member, where the retainer cavity is provided suitable to accommodate said wheel member, where the retainer member has a first side wall covering a first part of the retainer member having a first outer radius, and a second side wall covering a second part of the retainer member having a second outer radius, where the transition from the first wall to the second wall provides a transition surface from a top end towards a bottom end of the retainer member, where the first end of said separation member is displaced relative to said transition surface, upwards and away from said retainer member, providing said slit between the first end of said separation member and the transition surface of said retainer member

The retainer member has a first side wall covering a first part of the retainer member. The first side wall is arranged in a distance from the center axis in a first outer radius. The retainer member may be provided with a second side wall, covering a second part of the retainer member. The first and second parts of the retainer member cover the entire side wall of the retainer member. The second side wall is arranged in a distance from the center axis in a second outer radius. The transition between the first side wall and the second side wall may comprise two transition surfaces. Alternative is that the first side wall extends gradually to the second side wall instead of providing a transition surface. The distance of the first outer radius may then gradually increase to the distance of the second outer radius, along the entire side of the retainer member, leaving only one transition surface on the retainer member.

The retainer member may also comprise a shape where the separation member may rest so that the second end of the separation member wholly or partly is adjacent to a transition surface provided on/in the retainer member. Still the separation may form a substantially wedge threaded form of flange where the flange extends substantially perpendicular to the rotating axis of the retainer member. The first end of the separation member is displaced relative to an alternative transition surface of the retainer member. The first end of the separation member is lifted away from a carrying surface on top of the retainer member. The displacement provides a slit between the first end of said separation member and the transition surface on the retainer member. The size of the slit depends on the size and form of the containers to be separated.

In a further advantageous embodiment of the invention, the wheel member fully or partially is arranged in the retainer cavity of the retainer member, where the axis of said wheel member is identical to an axis of said cylinder shaped cavity.

The retainer member may be provided with a second circular cylinder shape comprising a retainer cavity. The retainer cavity may extend substantially axially through the retainer member. The retainer cavity is provided suitable to accommodate said wheel member. When the wheel member rotates the retainer member may rotate as well.

The wheel member and the retainer member may be wearing out differently. It is possible to replace the worn out member of the multipart de-stacker wheel separately. It has been proven to have a great return on investment when the members are implemented properly and the replacement process is straight forward. It will reduce the maintenance costs and the replacement process is quickly and agile, strait forward for the crew to handle.

In a still further advantageous embodiment of the invention, the retainer member is provided with a thread-like flange extending from the top end, along a part of an outer surface to the bottom end of the retainer member, proving a guidance track for the separation member.

The retainer member may be provided with a curved edge extending along part of the outer surface along the substantially circular cylinder shape retainer member. The curved edge provides a sloped guidance track, where the separation member and the stack carrying member may rest. When arranging/attaching the separation member and the stack carrying member to the retainer member, the sloped guidance track ensures the correct positioning of the separation member and the stack carrying member in relation to the retainer member. The assembly process is much quicker and easy relative to the assembling to a retainer member without a sloped guidance track.

In a further advantageous embodiment of the invention, a spacer member having a thread like shape, where a height of a first end of said spacer member is smaller than a high of a second end of said spacer member, where the height of a first end of said spacer member is smaller than the height of the second end of said separation member, where the first end of the spacer member is arranged adjacent to the second end of said separation member, where a bottom surface of said spacer member and the bottom surface of said separation member form a thread-like slope.

The space member may be arranged underneath the stack carrying member, so that both the first end of the space member and the first end of the stack carrying member is arranged adjacent to the second end of the separation member. The space member may also comprise a thread-like wedge shape. The space member and the separation member are then forming an elongated wedge. The bottom surface of said spacer member and the bottom surface of said separation member form a continuing thread-like slope. The flange of a container may be led into the slit, so that the container will be forced downwards by the bottom surface's thread-like slope, where the thread-like slope leading the container downwards and away from the stack when the multipart de-stacker wheel rotates. This construction ensures a perfectly separation of the container from the stack of containers, in a nice and easy manner.

In a still further advantageous embodiment of the invention, one or more members of said wheel member, stack carrying member, separation member is provided in a material different from the others, where the material comprises one or more of following: nickel, aluminum, steel, stainless steel, titanium, osmium, iridium, platinum.

The material may be a pure metal, polymers or the material may be an alloy comprising a plurality of metal and/or polymers.

The different members in the multipart de-stacker wheel may be exposed to different levels of wear, and the members do not wear out just as quickly. Also the surfaces of a member may be provided with a durable alloy. The material of the stack carrying member may comprise aluminum and the surface of the stack carrying member may be provided with an alloy comprising titanium or osmium. The wheel member may be provided in stainless steel etc. When the members are worn out and must be replaced, it may then be possible only to replace the worn out member of the multipart de-stacker wheel. This will lower the costs and the replacement process is quick and agile.

A first example; the wheel member or the surface of the wheel member may be manufactured in a first material and/or alloy material, where the first material and/or alloy differs from a material and/or alloy material of said stack carrying member and/or said separation member, said spacer member, said retainer member.

A second example; said separation member and/or the surface of the separation member may be manufactured in a first material and/or alloy material, where the first material and/or alloy differs from a material and/or alloy material of said wheel member, said stack carrying member, said spacer member, said retainer member.

The invention also provides a dispenser for dispensing containers in a predetermined direction, where the containers are of the type having a flange extending outwards from an upper periphery of the container, wherein a stack of substantially identical containers are arranged in a de-stacking device, and where one or more parallel rotating axles are provided adjacent the stack of containers, such that one or more de-stacker wheels engages the stack of containers.

A de-stacking device for dispensing containers comprising one or more multipart de-stacker wheel ensures a perfect separation of the container from the stack of containers, in a fast manner and, where the containers are not damaged in the de-stacking process. The multipart de-stacker wheel or wheels handles this carefully. The dimension of the slit and wedge shape of the separation member provides a firm grip in the flange of the container. The container is easily and smoothly forced downwards using the thread-link sloped bottom side of the separator and/or e.g. the space member. The separation speed is determined by the rotation speed of the rotation axel. If the de-stacking device(s) comprises more than one multipart de-stacker wheel, the multipart de-stacker wheel may be arranged so that the separation may increase. The multipart de-stacker wheels may be arranged in each end of the stack of the containers.

The invention also provides a method of dispensing a container from a stack of identical containers, where the containers are provided with a flange extending from the periphery of the container, where the containers are arranged in a de-stacking device, where one or more parallel rotating axles are provided adjacent the stack of containers, and a de-stacker wheel is arranged on each rotating axle, where the de-stacker wheel engages the stack of containers, such that the stack of containers is retained on a carrying surface of the de-stacker wheels, and as the de-stacker wheel is rotating the flange of the lowermost container entering a slit, and the flange of the second lowermost container sliding on a stack carrying member, where a thread-like bottom surface of a separation member forcing the container downwards and free relative to the stack.

The multipart de-stacker wheel may provide many advantages. The multipart de-stacker wheel is easily adaptable to any given denester system. It is an easy task for the maintenance crew to replace and/or change members. The multipart de-stacker wheel is among outer functions, designed to improve the efficiency and effectiveness of the maintenance activities. The timespan for the denester system to be out of operation is reduced.

Further aspects of the invention include embodiments where the multipart de-stacker wheel is provided with three further advantageous features. In the retainer and the spacer are provided are provided indication codes. These indication codes are used for assembling the retainer relative to the spacer in the exact same manner, such that the overall dimensions of a particular de-stacker wheel, can be replicated exactly for example in case of replacement, or if a number of identical de-stacker wheels are needed in a production line. By turning the retainer relative to the spacer before assembling, the characteristics of the retainer wheel with respect to for example the gap may be controlled. Another de-stacker wheel may be made exactly identical by arranging the retainer with respect to the spacer according to the exact same indication codes.

A further feature is the provision of one or more shims. The shims may be selected in a number of thicknesses and as such by being positioned underneath the retainer be used to control the height of the de-stacker wheel, and thereby the exact position where the de-stacker wheel engages a stack of trays to be dispensed.

A still further feature is the provision of a lower shelf. The shelf extends radially from the de-stacker wheel, and circumscribes part of the circumference. The lower shelf is positioned below the retainer and the spacer. The function of the lower shelf is to catch a newly separated tray from the stack of trays when such a tray has been separated and pushed downwards by the separation member. During separation of a tray from a stack of trays an under-pressure between the lowermost tray and trays above and also static electricity may cause the lowermost tray to wobble or be separated unevenly from the stack. This may cause that the tray does not land on an underlying conveyor in a stable manner and position. However, when the tray is arrested on the lower tray the tray's movement is stabilized and when released from the lower shelf during the de-stacking of the next tray, the tray will arrive at an underlying conveyor in a secure stable manner.

The invention has now been explained with reference to a few embodiments which have only been discussed in order to illustrate the many possibilities and varying design possibilities achievable with the multipart de-stacker wheel for a denester according to the present invention.

### Description of the Drawing

The invention will now be described with reference to the accompanying drawing wherein:
Fig. 1: Illustrating a de-stacker wheel from a top view
Fig. 2: Illustrating a de-stacker wheel from a bottom view
Fig. 3: Illustrating a de-stacker wheel from an exploded view
Fig. 4: Illustrating a de-stacker wheel interacting with a stack of containers.
Fig. 5: illustrates an exploded view of a further embodiment of the de-stacker wheel.

### Detailed Description of the Invention

An embodiment of the invention is explained in the following detailed description. It is to be understood that the invention is not limited in its scope to the following description or illustrated in the drawings. The invention is capable of other embodiments and of being practiced or carried out in various ways.

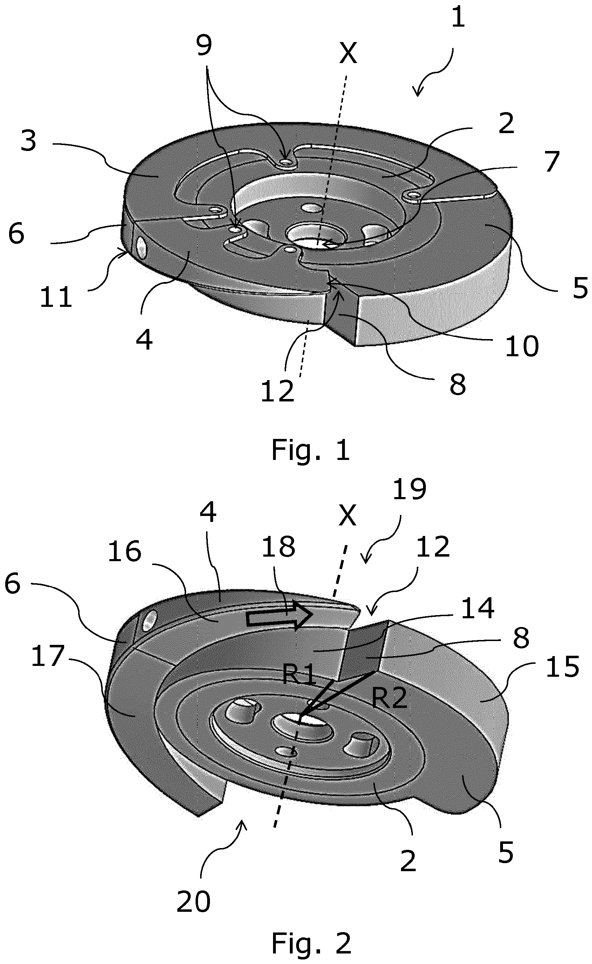

Fig. 1 illustrates a de-stacker wheel 1 from a top view. The multipart de-stacker wheel 1 for a denester comprises following parts: a wheel member 2, a stack carrying member 3, a separation member 4, a retainer member 5 and space member 6. The wheel member 2 has a first circular cylinder shape provided with a central cavity 7 extending axially through the wheel member 2. The central cavity 7 is provided suitable to accommodate a rotating axel, not showed in fig. 1. The wheel member 2 rotates around the rotation axis X.

The stack carrying member 3 has a carrying surface turning upwards on the illustration. The stack carrying member 3 is arranged in relation to the wheel member 2 covering a first part of the top side of the wheel member 2. The stack carrying member 3 is attached to the top surface of the wheel member 2 using fastening means 9. Stack carrying member 3 extends away from the wheel member substantially perpendicular to an axis X of said wheel member 2. The carrying surface is facing away from the wheel member 2.

The separation member 4 has an elongated thread-like wedge shape resting along the circumference of the wheel member 2. The separation member 4 is attached to the top surface of the wheel member 2 using fastening means 9. The height of the first end 10 of the separation member 4 is smaller than a height of a second end 11 of said separation member 4, where the separation member 4 is attached to the top side on the wheel member 2 covering a second part of the top side. The separation member 4 extends away from the wheel member 2 substantially perpendicular to the rotation axis X of said wheel member 2. The second end 11 of said separation member is adjacent to the first end of said stack carrying member 3 and the space member 6.

The first end 10 of said separation member 4, which forms a separation edge, is displaced relative to the transition surface provided on the retainer member 5. The first end 10 of said separation member 4 is elevated away from the retainer member 5, providing a slit or a gap 12 between the separation member 4 and the retainer member 5.

The multipart de-stacker wheel rotates about the axis X parallel to a stack of containers, which is not showed in fig 1. Each container has a flange along its perimeter. The containers are de-stacked one by one, when the separation edge of the separation member 4 comes in contact with the flange of said container. By means of the wedge shaped separation member 4 forces said container away from the stack of containers, when the multipart de-stacker wheel in use is moving.

The retainer member 5 has a second circular cylinder shape with a retainer cavity extending axially through said the retainer member 5. The wheel member 2 is arranged in the retainer cavity of the retainer member 5. The rotation axis X of said wheel member 2 is identical to a rotation axis X of the retainer member 5. The spacer member 6 is arranged as an extension to the separation member 4. The stack carrying member 3 is arranged on top of the spacer member 6, and both adjacent to the separation member 4. The height of both the stack carrying member 3 and the spacer member 6 together is substantially equal to the second end of the separation member 4.

Fig. 2 illustrates a de-stacker wheel from a bottom view. The cavity of the retainer member is suitable to accommodate said wheel member 2, where the wheel member is fully placed in the cavity. The retainer member 5 has a first side wall 14 covering a first part of the retainer member 2 having a first outer radius R1, and a second side wall 15 covers a second part of the retainer member having a second outer radius R2.

A transition from the first side wall 14 to the second side wall 15 provides a transition surface 8, which extend from the top side 19 of the retainer member towards the bottom side 20 of the retainer member 5.

The first end of said separation member 4, facing the transition surface 8, is displaced relative to said transition surface 8, from the top side 19 and away from said retainer member 5, thereby providing a slit 12 between the first end of the separation member 4 and the transition surface 8. The slit is larger than the flange on a container in the stack. The containers are de-stacked one by one, when the flange of the container is led into the slit 12 and forced downwards and away from the other containers in the stack, where the stack is carried on the top surface on the separation member 4 away from the slit 12.

The spacer member 6 has an elongated thread-like shape resting along the side of the retaining member 5. The height of the first end of said spacer member 6 is smaller than the high of a second end of said spacer member 6, forming a sloped bottom side 17. The height of a first end of said spacer member 6 is smaller than the height of the second end of said separation member 4. The first end of the spacer member 6 is arranged adjacent to the second end of said separation member 4. The bottom surface 17 of said spacer member 6 and the bottom surface 16 of said separation member 4 form a thread-like slope. When the flange of a container is led into the slit 21, the container will be forced downwards by the thread-like slope provided by the bottom surfaces 16, 17 leading the container away from the stack.

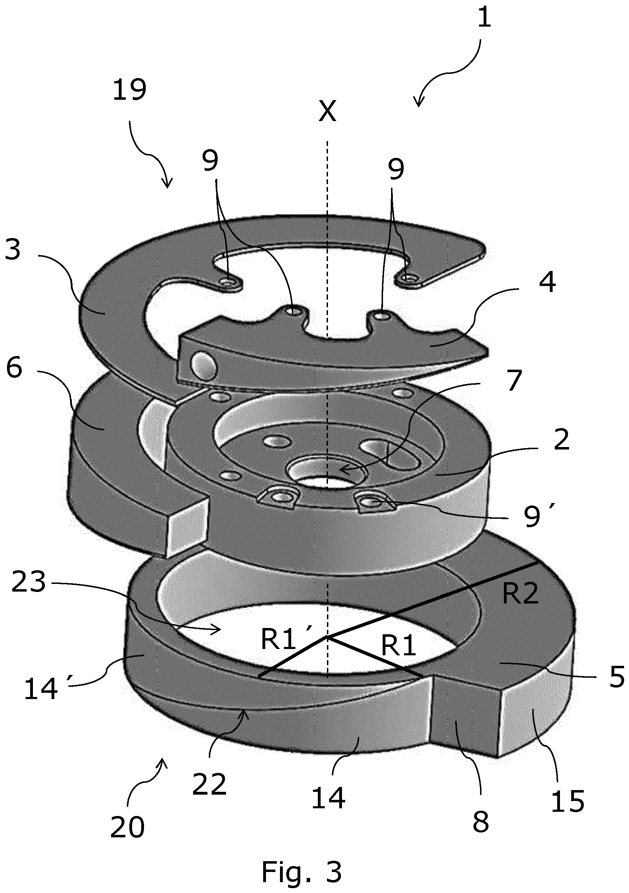

Fig. 3 illustrates a de-stacker wheel from an exploded view, where the de-stacker wheel comprises 5 parts. The wheel member has a first circular cylinder shape and the retainer member has a second circular cylinder shape with a retainer cavity 23 extending axially through said retainer member 5. The outer circumference of the wheel member fits into the retainer cavity 23. The rotation axis X of the wheel member 2 is equal to the rotation axis of the retainer member 5. The transition from the first wall 14 to the second wall 15 provides a transition side 8 from a top of the retainer member 5 towards a bottom of the retainer member 5. The first end of said separation member 5 is displaced relative to said transition side 8.

The de-stacker wheel 1 is adapted to rotate around the rotation axis X. Dispensing a container from a stack of identical containers, where the containers are provided with a flange extending from the periphery of the container, where the containers are arranged in a de-stacking device 1, is not shown in fig. 3 A de-stacker wheel 1 is arranged on a rotating axle, not showed in the fig. 3, where the de-stacker wheel 1 is capable of engaging the stack of containers, such that the stack of containers is retained on a carrying surface on the top side 19 of the de-stacker wheel, and as the de-stacker wheel is rotating the flange of the lowermost container entering a slit, and the flange of the second lowermost container sliding on a stack carrying member 3, where a thread-like bottom surface of a separation member 4 forcing the container downwards and free relative to the stack.

The separation member 4 is formed as a wedge, which is arranged partly on top of the wheel member 3. The separation member 4 is attached to the wheel member 2 using attachment means 9, e.g. screws and/or bolts. Furthermore, the separation member 4 is partly lowered into the cavity arranged on the top side 19 of the wheel member 2 suitable to accommodate the separation member and the attachment means 9', which also are lowered accordantly. When lowering the separation member 4 is partly lowered into the wheel member 2, the separation member 4 is fastened and locked, during use. The separation member 4 is robust against forces applied towards the first end by the container, when the container during use is forced downwards.

The spacer member 6 has a thread like shape, where a height of a first end of the spacer member 6 is smaller than a high of a second end of said spacer member 6. The height of a first end of said spacer member 6 is smaller than the height of the second end of said separation member 6. The first end of the spacer member is arranged adjacent to the second end of the separation member 4. The spacer member 6 and the separation member 4 form an elongated thread-like wedge. The bottom surface of the spacer member 6 and bottom surface of the separation member 4 forms an elongated thread-like slope.

The stack carrying member 3 is formed as a plate, which is arranged partly on top of the spacer member 6 and partly on top of the wheel member 3. The stack carrying member is attached to the wheel member 2 using attachment means 9, e.g. screws and/or bolts. The stack carrying member and the spacer member 6 are arranged as an extension to the separation member 5. The stack carrying member 3 is carrying the stack of containers, where the spacer member 6 forces the containers downwards one by one away from the stack.

The retainer member 5 is provided with a curved edge 22 extending along an outer surface, from the top surface 19 on the first side wall 14 to the bottom side 20 of the retainer member 5. The edge 22 provides a sloped guidance track for the separation member 5 and the spacer member 6. The retainer member 5 has a lower first side wall 14 covering a lower first part of the retainer member 2 having a lower first outer radius R1. The retainer member 5 also comprises an upper first side wall 14' covering an upper first part of the retainer member 2 having an upper first outer radius R1'. The retainer member 5 has a second side wall 15 that covers a second part of the retainer member having a second outer radius R2. The separation member 5 and the spacer member 6 rest on the edge 22, where the slope provided at the bottom of the separation member 5 and the spacer member 6 is substantially equal.

Fig. 1 to 3 show an embodiment of the multipart de-stacker wheel 1 for a denester where the denester may be provided with a plurality of members, and may then further be divided into members of the member. As a starting point, an alternative de-stacker wheel 1 may comprise:
- a wheel member 2 having a first circular cylinder shape provided with a central cavity 7 extending axially through the wheel member 2, where the central cavity 7 is suitable to accommodate a rotating axis X, where the wheel member 2 has a top side,
- at least one stack carrying member 3 having a carrying surface, where the stack carrying member 3 is arranged on the wheel member 1 covering a first part of the top side and extends away from the wheel member 1 substantially perpendicular to an rotation axis X of said wheel member 1,
- a separation member 4 having wedge shape, where a height of a first end 10 of said separation member 4 is smaller than a height of a second end 11 of said separation member 4, where the separation member 4 is attached to the top side on the wheel member 2 covering a second part of the top side and extends away from the wheel member 2 substantially perpendicular to the rotation axis X of said wheel member 2, where the second end 11 of said separation member 4 is adjacent to a first end of said stack carrying member 6, where the first end 10 of said separation member 4 is displaced relative to a second end of said stack carrying member 6, away from the top side of said stack carrying member 3, providing a slit 12 between the first end of said separation member 4 and the second end of said stack carrying member 3 so when said multipart de-stacker wheel 1 rotates about the axis X of said wheel member 2, parallel to a stack of containers, where each container has a flange along its perimeter, the containers are de-stacked one by one, when the separation member 4 comes in contact with the flange of said container, and by means of the wedge shaped separation member 4 forces said container away from the stack of containers.

The stack carrying member 3 comprises a retainer member 5 having a second circular cylinder shape with a retainer cavity extending axially through said retainer member 5, where the retainer cavity is provided suitable to accommodate said wheel member 2, where the retainer member 5 has a first side wall 14 covering a first part of the retainer member 5 having a first outer radius R1, and a second side wall 15 covering a second part of the retainer member 5 having a second outer radius R2, where the transition from the first wall 14 to the second wall 15 provides a transition surface 8 from a top end 19 towards a bottom end 19 of the retainer member 5, where the first end 10 of said separation member 4 is displaced relative to said transition surface 8, upwards and away from said retainer member 5, providing said slit 12 between the first end 10 of said separation member 4 and the transition surface 8 of said retainer member 5.

The wheel member 2 is fully or partially arranged in the retainer cavity of the retainer member 5, where the axis X of said wheel member 2 is identical to an axis of said cylinder shaped cavity in the retainer member 5.

The retainer member 5 is provided with a thread like edge 22 extending from the top end 19, along a part of an outer surface 14, 14' to the bottom end 20 of the retainer member 5, proving a guidance track for the separation member 6.

The spacer member 6 has a tread like shape, where a height of a first end of said spacer member 4 is smaller than a high of a second end of said spacer member 6, where the height of a first end of said spacer member 6 is smaller than the height of the second end of said separation member 4, where the first end of the spacer member 6 is arranged adjacent to the second end of said separation member 4, where a bottom surface 17 of said spacer member 6 and the bottom surface 16 of said separation member 4 forms an thread-like slope.

One or more members of following members: said wheel member 2, stack carrying member 3, separation member 4 is provided in a material different from the others, where the material comprises one or more of following: nickel, aluminium, steel, stainless steel, titanium, osmium, iridium, platinum.

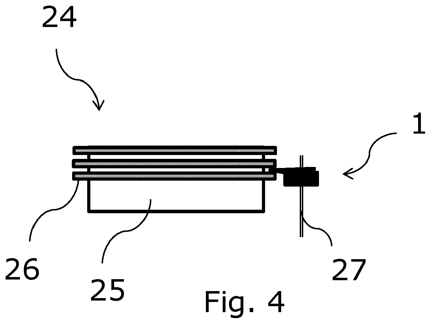

Fig. 4 illustrates a de-stacker wheel interacting with a stack of containers. The stack of containers 24 arranged in relation to the de-nester wheel 1 are of the type having a flange 26 extending outwards from an upper periphery of the container 25, wherein a stack of substantially identical containers 24 are arranged in a de-stacking device, not shown in fig. 4. One or more parallel rotating axles 27 are provided adjacent the stack of containers 24, such that one or more de-stacker wheels 1 engages the stack of containers 24.

The method of dispensing a container 25 from a stack of identical containers 24, where the containers 25 are provided with a flange 26 extending from the periphery of the container 25, where the containers 25 are arranged in a de-stacking device, not shown in fig. 4, where one or more parallel rotating axles 27 are provided adjacent the stack of containers 24, and a de-stacker wheel 1 is arranged on each rotating axle 27, where the de-stacker wheel 1 engaging the stack of containers 24, such that the stack of containers 24 is retained on a carrying surface of the de-stacker wheels 1, and as the de-stacker wheel 1 is rotating the flange 26 of the lowermost container entering a slit 12, and the flange 26 of the second lowermost container sliding on a stack carrying member 3, where a thread-like bottom surface 16 of a separation member 4 forcing the container 25 downwards and free relative to the stack 24.

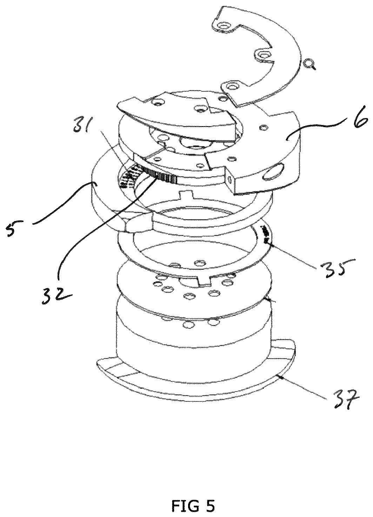

In fig. 5 is illustrated a further embodiment where the multipart de-stacker wheel is provided with three further advantageous features. In the retainer 5 and the spacer 6 indication codes 31,32 are provided. These indication codes 31,32 are used for assembling the retainer 5 relative to the spacer in the exact same manner, such that the overall dimensions of a particular de-stacker wheel 1, can be replicated exactly for example in case of replacement, or if a number of identical de-stacker wheels are needed in a production line. By turning the retainer 5 relative to the spacer 6 before assembling the characteristics of the retainer wheel with respect to for example the gap 12 may be controlled. Another de-stacker wheel may be made exactly identical by arranging the retainer 5 with respect to the spacer 6 according to the exact same indication codes 31,32.

A further feature is the provision of one or more shims 35. The shims 35 may be selected in a number of thicknesses and as such by being positioned underneath the retainer 5 be used to control the height of the de-stacker wheel, and thereby the exact position where the de-stacker wheel engages a stack of trays to be dispensed.

A still further feature is the provision of a lower shelf 37. The shelf 37 extends radially from the de-stacker wheel, and circumscribes part of the circumference. The lower shelf 37 is positioned below the retainer 5 and the spacer 6. The function of the lower shelf 37 is to catch a newly separated tray from the stack of trays when such a tray has been separated and pushed downwards by the separation member 4. During separation of a tray from a stack of trays an under-pressure between the lowermost tray and trays above and also static electricity may cause the lowermost tray to wobble or be separated unevenly from the stack. This may cause that the tray does not land on an underlying conveyor in a stable manner and position. However when the tray is arrested on the lower tray the tray's movement is stabilized and when released from the lower shelf during the de-stacking of the next tray, the tray will arrive at an underlying conveyor in a secure stable manner.

## Claims

1. Multipart de-stacker wheel (1) for a denester, where said de-stacker wheel (1) comprises:
- a wheel member (2) having a first circular cylinder shape provided with a central cavity (7) extending axially through the wheel member (2), where the central cavity (7) is suitable to accommodate a rotating axle (27) where the wheel member (2) has a top side,
- at least one stack carrying member (3) having a carrying surface, where the stack carrying member (3) is arranged on the wheel member (2) covering a first part of the top side and extends away from the wheel member substantially perpendicular to a rotation axis (X) of said wheel member (2),
- a separation member (4) having a wedge shape, where a height of a first end (10) of said separation member (4) is smaller than a height of a second end (11) of said separation member (4), where the separation member (4) is attached to the top side on the wheel member (2)covering a second part of the top side and where the separation member (4) or part of the separation member extends away from the wheel member (2) substantially perpendicular to the rotation axis (X) of said wheel member (2), where the second end (11) of said separation member (4) is adjacent to a first end of said stack carrying member (3), where the first end (10) of said separation member (4) is displaced relative to a second end of said stack carrying member (3), away from the top side of said stack carrying member (3), providing a slit (12) between the first end (10) of said separation member (4) and the second end of said stack carrying member (3)
so when said multipart de-stacker wheel (1) rotates about the axis (X) of said wheel member (2), parallel to a stack of containers (24), where each container (25) has a flange (26) along its perimeter, the containers (25) are de-stacked one by one, when the separation member (4) comes in contact with the flange (26) of said container, and by means of the wedge shaped separation member (4) forces said container (25) away from the stack of containers.

2. Multipart de-stacker wheel according to claim 1, where said stack carrying member (3) comprises a retainer member (5) having a second circular cylinder shape with a retainer cavity (23) extending axially through said retainer member (5), where the retainer cavity (23) is provided suitable to accommodate said wheel member (2), where the retainer member (5) has a first side wall (14) covering a first part of the retainer member (5) having a first outer radius (R1), and a second side wall (15) covering a second part of the retainer member having a second outer radius (R2), where the transition from the first wall to the second wall provides a transition surface (8) from a top end (19) towards a bottom end (20) of the retainer member (5), where the first end of said separation member (4) is displaced relative to said transition surface (8), upwards and away from said retainer member (5), providing said slit (12) between the first end (10) of said separation member (4) and the transition surface (8) of said retainer member (5).

3. Multipart de-stacker wheel according to claim 2, where the wheel member (2) fully or partially is arranged in the retainer cavity (23) of the retainer member (5), where the axis (X) of said wheel member (2) is identical to an axis of said cylinder shaped retainer cavity (23).

4. Multipart de-stacker wheel according to claim 2, where the retainer member (5) is provided with a thread like edge (22) extending from the top end, along a part of an outer surface to the bottom end of the retainer member (5), proving a guidance track for the separation member (4).

5. Multipart de-stacker wheel according to any of the preceding claims, where a spacer member (6) having a thread like shape, where a height of a first end of said spacer member (6) is smaller than a height of a second end of said spacer member (6), where the height of a first end of said spacer member (6) is smaller than the height of the second end (11) of said separation member (4), where the first end of the spacer member (6) is arranged adjacent to the second end (11) of said separation member (4), where a bottom surface of said spacer member (17) and the bottom surface of said separation member (4) forms a thread-like slope (22).

6. Multipart de-stacker wheel according to any of the preceding claims, where one or more of following members: said wheel member (2), stack carrying member (3), separation member (4) is provided in a material different from the others, where the material comprises one or more of following: nickel, aluminium, steel, stainless steel, titanium, osmium, iridium, platinum.

7. Dispenser for dispensing containers in a predetermined direction, where the containers (25) are of the type having a flange (26) extending outwards from an upper periphery of the container (25), wherein a stack (24) of substantially identical containers (25) are arranged in a de-stacking device, and where one or more parallel rotating axles (27) are provided adjacent the stack of containers (24), such that one or more de-stacker wheels (1) according to any of claims 1 to 6 engages the stack (24) of containers.

8. Method of dispensing a container (25) from a stack (24) of identical containers, where the containers (25) are provided with a flange (26) extending from the periphery of the container (25), where the containers (25) are arranged in a de-stacking device, where one or more parallel rotating axles (27) are provided adjacent the stack (24) of containers, and a de-stacker wheel according to any of claims 1 to 6 is arranged on each rotating axle (27), where the de-stacker wheel (1) engaging the stack (24) of containers, such that the stack (24) of containers is retained on a carrying surface (19) of the de-stacker wheels (1), and as the de-stacker wheel (1) is rotating the flange (26) of the lowermost container (25) entering a slit (12), and the flange (26) of the second lowermost container (25) sliding on a stack carrying member (3), where a thread-like bottom surface (16) of a separation member (4) forcing the container (25) downwards and free relative to the stack (24).

## Patentansprüche

1. Mehrteiliges Entstapelrad (1) für einen Entstapler, wobei das Entstapelrad (1) Folgendes umfasst:
- ein Radelement (2), das eine erste Kreiszylinderform aufweist, das mit einem zentralen Hohlraum (7) bereitgestellt ist, der sich axial durch das Radelement (2) erstreckt, wobei der zentrale Hohlraum (7) geeignet ist, um eine Drehachse (27) aufzunehmen, wobei das Radelement (2) eine Oberseite aufweist,
- zumindest ein Stapeltrageelement (3), das eine Tragfläche aufweist, wobei das Stapeltrageelement (3) auf dem Radelement (2) angeordnet ist, einen ersten Teil der Oberseite bedeckt und sich weg von dem Radelement im Wesentlichen senkrecht zu einer Drehachse (X) des Radelements (2) erstreckt,
- ein Trennelement (4), das eine Keilform aufweist, wobei eine Höhe eines ersten Endes (10) des Trennelements (4) kleiner als eine Höhe eines zweiten Endes (11) des Trennelements (4) ist, wobei das Trennelement (4) an der Oberseite des Radelements (2) angebracht ist, einen zweiten Teil der Oberseite bedeckt und wobei sich das Trennelement (4) oder ein Teil des Trennelements weg von dem Radelement (2) im Wesentlichen senkrecht zu der Drehachse (X) des Radelements (2) erstreckt, wobei das zweite Ende (11) des Trennelements (4) benachbart zu einem ersten Ende des Stapeltrageelements (3) ist, wobei das erste Ende (10) des Trennelements (4) relativ zu einem zweiten Ende des Stapeltrageelements (3) weg von der Oberseite des Stapeltrageelements (3) verschoben ist, wodurch ein Schlitz (12) zwischen dem ersten Ende (10) des Trennelements (4) und dem zweiten Ende des Stapeltrageelements (3) bereitgestellt wird, sodass, wenn sich das mehrteilige Entstapelrad (1) um die Achse (X) des Radelements (2) parallel zu einem Stapel von Behältern (24) dreht, wobei jeder Behälter (25) einen Flansch (26) entlang seines Umfangs aufweist, die Behälter (25) einer nach dem anderen entstapelt werden, wenn das Trennelement (4) mit dem Flansch (26) des Behälters in Kontakt kommt, und mittels des keilförmigen Trennelements (4) den Behälter (25) weg von dem Behälterstapel drängt.

2. Mehrteiliges Entstapelrad nach Anspruch 1, wobei das Stapeltrageelement (3) ein Halteelement (5) umfasst, das eine zweite kreisförmige Zylinderform mit einem Haltehohlraum (23) aufweist, der sich axial durch das Halteelement (5) erstreckt, wobei der Haltehohlraum (23) geeignet bereitgestellt ist, um das Radelement (2) aufzunehmen, wobei das Halteelement (5) eine erste Seitenwand (14), die einen ersten Teil des Halteelements (5) bedeckt, der einen ersten Außenradius (R1) aufweist, und eine zweite Seitenwand (15) aufweist, die einen zweiten Teil des Halteelements bedeckt, der einen zweiten Außenradius (R2) aufweist, wobei der Übergang von der ersten Wand zu der zweiten Wand eine Übergangsfläche (8) von einem oberen Ende (19) zu einem unteren Ende (20) des Halteelements (5) bereitstellt, wobei das erste Ende des Trennelements (4) relativ zu der Übergangsfläche (8) nach oben und weg von dem Halteelement (5) verschoben ist, wodurch der Schlitz (12) zwischen dem ersten Ende (10) des Trennelements (4) und der Übergangsfläche (8) des Halteelements (5) bereitgestellt wird.

3. Mehrteiliges Entstapelrad nach Anspruch 2, wobei das Radelement (2) vollständig oder teilweise in dem Haltehohlraum (23) des Halteelements (5) angeordnet ist, wobei die Achse (X) des Radelements (2) identisch mit einer Achse des zylinderförmigen Haltehohlraums (23) ist.

4. Mehrteiliges Entstapelrad nach Anspruch 2, wobei das Halteelement (5) mit einer gewindeartigen Kante (22) bereitgestellt ist, die sich von dem oberen Ende entlang eines Teils einer Außenfläche zu dem unteren Ende des Halteelements (5) erstreckt, wodurch eine Führungsspur für das Trennelement (4) bereitgestellt wird.

5. Mehrteiliges Entstapelrad nach einem der vorhergehenden Ansprüche, wobei ein Abstandselement (6) eine gewindeartige Form aufweist, wobei eine Höhe eines ersten Endes des Abstandselements (6) kleiner als eine Höhe eines zweiten Endes des Abstandselements (6) ist, wobei die Höhe eines ersten Endes des Abstandselements (6) kleiner als die Höhe des zweiten Endes (11) des Trennelements (4) ist, wobei das erste Ende des Abstandselements (6) benachbart zu dem zweiten Ende (11) des Trennelements (4) angeordnet ist, wobei eine untere Oberfläche des Abstandselements (17) und die untere Oberfläche des Trennelements (4) eine gewindeartige Neigung (22) bilden.

6. Mehrteiliges Entstapelrad nach einem der vorhergehenden Ansprüche, wobei eines oder mehrere der folgenden Elemente: das Radelement (2), das Stapeltrageelement (3), das Trennelement (4) in einem anderen Material als die anderen bereitgestellt ist, wobei das Material eines oder mehrere des Folgenden umfasst: Nickel, Aluminium, Stahl, Edelstahl, Titan, Osmium, Iridium, Platin.

7. Ausgabevorrichtung zum Ausgeben von Behältern in einer vorbestimmten Richtung, wobei die Behälter (25) von der Art sind, die einen Flansch (26) aufweist, der sich von einem oberen Umfang des Behälters (25) nach außen erstreckt, wobei ein Stapel (24) von im Wesentlichen identischen Behältern (25) in einer Entstapelvorrichtung angeordnet ist, und wobei eine oder mehrere parallele Drehachsen (27) benachbart zu dem Stapel von Behältern (24) bereitgestellt sind, sodass ein oder mehrere Entstapelräder (1) nach einem der Ansprüche 1 bis 6 den Stapel (24) von Behältern in Eingriff nehmen.

8. Verfahren zum Ausgeben eines Behälters (25) von einem Stapel (24) von identischen Behältern, wobei die Behälter (25) mit einem Flansch (26) bereitgestellt sind, der sich von dem Umfang des Behälters (25) erstreckt, wobei die Behälter (25) in einer Entstapelvorrichtung angeordnet sind, wobei eine oder mehrere parallele Drehachsen (27) benachbart zu dem Stapel (24) von Behältern bereitgestellt sind und ein Entstapelrad nach einem der Ansprüche 1 bis 6 an jeder Drehachse (27) angeordnet ist, wobei das Entstapelrad (1) den Stapel (24) von Behältern in Eingriff nimmt, sodass der Stapel (24) von Behältern auf einer Tragfläche (19) der Entstapelräder (1) gehalten wird, und während sich das Entstapelrad (1) dreht, der Flansch (26) des untersten Behälters (25) in einen Schlitz (12) eintritt und der Flansch (26) des zweituntersten Behälters (25) auf einem Stapeltrageelement (3) gleitet, wobei eine gewindeartige untere Oberfläche (16) eines Trennelements (4) den Behälter (25) nach unten und frei relativ zu dem Stapel (24) drängt.

## Revendications

1. Roue de désempileur en plusieurs parties (1) pour un dépileur, ladite roue de désempileur (1) comprenant :
- un élément de roue (2) ayant une première forme de cylindre circulaire pourvue d'une cavité centrale (7) s'étendant axialement à travers l'élément de roue (2), où la cavité centrale (7) est appropriée pour loger un essieu rotatif (27) où l'élément de roue (2) a un côté supérieur,
- au moins un élément de transport de pile (3) ayant une surface porteuse, où l'élément de transport de pile (3) est agencé sur l'élément de roue (2) couvrant une première partie du côté supérieur et s'étend à l'opposé de l'élément de roue sensiblement perpendiculairement à un axe de rotation (X) dudit élément de roue (2),
- un élément de séparation (4) ayant une forme de coin, où une hauteur d'une première extrémité (10) dudit élément de séparation (4) est inférieure à une hauteur d'une seconde extrémité (11) dudit élément de séparation (4), où l'élément de séparation (4) est fixé au côté supérieur sur l'élément de roue (2) couvrant une seconde partie du côté supérieur et où l'élément de séparation (4) ou une partie de l'élément de séparation s'étend à l'opposé de l'élément de roue (2) sensiblement perpendiculaire à l'axe de rotation (X) dudit élément de roue (2), où la seconde extrémité (11) dudit élément de séparation (4) est adjacente à une première extrémité dudit élément de transport de pile (3), où la première extrémité (10) dudit élément de séparation (4) est déplacée par rapport à une seconde extrémité dudit élément de transport de pile (3), loin du côté supérieur dudit élément de transport de pile (3), ménageant une fente (12) entre la première extrémité (10) dudit élément de séparation (4) et la seconde extrémité dudit élément de transport de pile (3) ainsi, lorsque ladite roue de désempileur en plusieurs parties (1) tourne autour de l'axe (X) dudit élément de roue (2), parallèlement à une pile de récipients (24), où chaque récipient (25) a une collerette (26) le long de son périmètre, les récipients (25) sont désempilés un par un, lorsque l'élément de séparation (4) vient en contact avec la collerette (26) dudit récipient, et au moyen de l'élément de séparation en forme de coin (4) provoque l'éloignement dudit récipient (25) de la pile de récipients.

2. Roue de désempileur en plusieurs parties selon la revendication 1, où ledit élément de transport de pile (3) comprend un élément de retenue (5) ayant une seconde forme de cylindre circulaire pourvue d'une cavité de retenue (23) s'étendant axialement à travers ledit élément de retenue (5), où la cavité de retenue (23) est prévue pour recevoir ledit élément de roue (2), où l'élément de retenue (5) a une première paroi latérale (14) recouvrant une première partie de l'élément de retenue (5) ayant un premier rayon extérieur (R1), et une seconde paroi latérale (15) couvrant une seconde partie de l'élément de retenue ayant un second rayon externe (R2), où la transition de la première paroi à la seconde paroi fournit une surface de transition (8) à partir d'une extrémité supérieure (19) vers une extrémité inférieure (20) de l'élément de retenue (5), où la première extrémité dudit élément de séparation (4) est déplacée par rapport à ladite surface de transition (8), vers le haut et loin dudit élément de retenue (5), ménageant ladite fente (12) entre la première extrémité (10) dudit élément de séparation (4) et la surface de transition (8) dudit élément de retenue (5).

3. Roue de désempileur en plusieurs parties selon la revendication 2, où l'élément de roue (2) est disposé totalement ou partiellement dans la cavité de retenue (23) de l'élément de retenue (5), où l'axe (X) dudit élément de roue (2) est identique à un axe de ladite cavité de retenue en forme de cylindre (23).

4. Roue de désempileur en plusieurs parties selon la revendication 2, où l'élément de retenue (5) est pourvu d'un bord en forme de filetage (22) s'étendant de l'extrémité supérieure, le long d'une partie d'une surface extérieure jusqu'à l'extrémité inférieure de l'élément de retenue (5), fournissant une voie de guidage pour l'élément de séparation (4).

5. Roue de désempileur en plusieurs parties selon l'une quelconque des revendications précédentes, où un élément d'espacement (6) ayant une forme semblable à un filetage, où une hauteur d'une première extrémité dudit élément d'espacement (6) est inférieure à une hauteur d'une seconde extrémité dudit élément d'espacement (6), où la hauteur d'une première extrémité dudit élément d'espacement (6) est inférieure à la hauteur de la seconde extrémité (11) dudit élément de séparation (4), où la première extrémité de l'élément d'espacement (6) est agencée adjacente à la seconde extrémité (11) dudit élément de séparation (4), où une surface inférieure dudit élément d'espacement (17) et la surface inférieure dudit élément de séparation (4) forment une pente en forme de filetage (22).

6. Roue de désempileur en plusieurs parties selon l'une quelconque des revendications précédentes, où un ou plusieurs des éléments suivants : ledit élément de roue (2), l'élément de transport de pile (3), l'élément de séparation (4) est prévu dans un matériau différent des autres, où le matériau comprend un ou plusieurs des éléments suivants : le nickel, l'aluminium, l'acier, l'acier inoxydable, le titane, l'osmium, l'iridium, le platine.

7. Distributeur destiné à distribuer des récipients dans une direction prédéterminée, où les récipients (25) sont du type ayant une collerette (26) s'étendant vers l'extérieur à partir d'un pourtour supérieur du récipient (25), dans lequel une pile (24) de récipients sensiblement identiques (25) sont agencés dans un dispositif de désempilage, et où un ou plusieurs essieux rotatifs parallèles (27) sont prévus adjacents à la pile de récipients (24), de sorte qu'une ou plusieurs roues de désempileur (1) selon l'une quelconque des revendications 1 à 6 vienne en contact avec la pile (24) de récipients.

8. Procédé de distribution d'un récipient (25) à partir d'une pile (24) de récipients identiques, où les récipients (25) sont munis d'une bride (26) s'étendant depuis le pourtour du récipient (25), où les récipients (25) sont agencés dans un dispositif de désempilage, où un ou plusieurs essieux rotatifs parallèles (27) sont prévus adjacents à la pile (24) de récipients, et une roue de désempileur selon l'une quelconque des revendications 1 à 6 est agencée sur chaque essieu rotatif (27), où la roue de désempileur (1) vient en contact avec la pile (24) de récipients, de sorte que la pile (24) de récipients soit retenue sur une surface porteuse (19) des roues de désempileur (1), et pendant que la roue de désempileur (1) fait tourner la collerette (26) du récipient le plus bas (25) qui pénètre dans une fente (12), et la collerette (26) du second récipient le plus bas (25) coulisse sur un élément de transport de pile (3), où une surface inférieure en forme de filetage (16) d'un élément de séparation (4) force le récipient (25) à aller vers le bas et le désolidarise de la pile (24).
